# EUROPÄISCHE PATENTSCHRIFT

(11) **EP 3 749 594 B1**
(45) Veröffentlichungstag und Bekanntmachung des Hinweises auf die Patenterteilung: **21.06.2023**
(21) Anmeldenummer: 19703318.6
(22) Anmeldetag: 05.02.2019
(51) Int. Cl.: B65G 1/04

(54) **KOMMISSIONIEREINRICHTUNG**
ORDER-PICKING SYSTEM
DISPOSITIF DE PRÉPARATION DE COMMANDES

(30) Priorität: 06.02.2018 DE 102018102646; 20.09.2018 DE 102018123179
(43) Veröffentlichungstag der Anmeldung: 16.12.2020
(73) Patentinhaber: Fellner, Herbert, 93059 Regensburg (DE); Brandmüller, Ludwig, 83026 Rosenheim (DE); Brandmüller, Ludwig Georg, 83026 Rosenheim (DE)
(72) Erfinder: Fellner, Herbert, 93059 Regensburg (DE); Brandmüller, Ludwig, 83026 Rosenheim (DE); Brandmüller, Ludwig Georg, 83026 Rosenheim (DE)
(74) Vertreter: Winter, Brandl - Partnerschaft mbB
(86) Internationale Anmeldenummer: PCT/EP2019/052794
(87) Internationale Veröffentlichungsnummer: WO 2019/154815

(56) Entgegenhaltungen:
- EP-A1- 2 995 579
- EP-A1- 3 023 364
- JP-A- H07 117 815
- US-A1- 2016 060 037

## Beschreibung

Die Erfindung betrifft eine Kommissioniereinrichtung gemäß dem Oberbegriff des Patentanspruchs 1.

Zur Optimierung von Lagerlogistikprozessen werden zunehmend vollautomatische Kommissionierungskonzepte realisiert.

Bekannt sind Kommissioniereinrichtungen, bei denen die Gebinde sortenrein angeliefert und dann über Vereinzelungsanlagen lageweise oder als Einzelgebinde auf Tablare aufgesetzt werden. Diese beladenen Tablare werden dann mittels einer aufwendigen Fördereinrichtung, beispielsweise bestehend aus einer Vielzahl von angetriebenen Rollen, auf denen die Tablare abrollen, zu einem Tablarlager gefördert und dort mittels Regalbediengeräten eingelagert.

Die automatische Kommissionierung erfolgt bei dieser bekannten Lösung außerhalb des Tablarlagers. Hierzu werden die entsprechenden Tablare sequenzgerecht von den Regalbediengeräten ausgelagert, die Gebinde in der benötigten Anzahl von den Tablaren abgenommen, vereinzelt und über lange Förderstrecken einer Palettierstation in der Packreihenfolge zugeführt. Diese Packreihenfolge wird in Abhängigkeit des Auftrags durch einen Packmustergenerator generiert.

Die verbliebenen Gebinde werden auf diesen Resttablaren ggf. wieder in das Tablarlager rückgelagert.

Problematisch bei derartigen Lösungen ist zum einen, dass ein ganz erheblicher Aufwand für die Bereitstellung, Lagerung und Aufbereitung der Tablare erforderlich ist. Zum anderen sind die erforderlichen Fördereinrichtungen, die die Tablare in das Tablarlager verbringen und von dort zur Kommissionierstation fördern, sehr aufwendig.

Des Weiteren kommt es bei diesen Anlagen relativ häufig zu Störungen an den Ein- und Ausschleusestellen und Eckumsetzungen durch instabile beziehungsweise labile Gebinde, so dass die entsprechende Förderstrecke blockiert ist. Diese Störungen müssen dann manuell von Mitarbeitern beseitigt werden und führen zu einem "Sequenzbruch" an der Palettierstation, so dass trotz Automatisierung ein vergleichsweise hoher Personalaufwand erforderlich ist.

In der DE 10 2013 100 048 A1 ist eine Kommissioniereinrichtung gezeigt, bei der ein Regalsystem über eine Vielzahl von Shuttlefahrzeugen bedient wird. Diese Shuttle-fahrzeuge sind mit Lastaufnahmemitteln versehen, deren Ausfahrweg in Abhängigkeit von Art, Anzahl oder Abmessung des Gutes weitestgehend frei steuerbar ist. So ist es möglich, dass Mischgebinde auf den Lastaufnahmemitteln der Shuttle aufgenommen und diese zum Einlagern oder Kommissionieren an weitere Stationen übergeben werden können. Die Kommissionierung erfolgt bei einem derartigen System direkt am Regalfach.

Aus der US 4 265 582 A ist eine Einrichtung zum Lagern von Paletten, die vorzugsweise mit Stabmaterialien, also länglichen Gegenständen bestückt sind, bekannt. Mehrere Regale sind nebeneinander ortsfest angeordnet und von mindestens einer breiten Seite über eine quer zu den Regalen verfahrbare Beschickungs- und Entnahmevorrichtung zugänglich. Mehrere Regalfächer nehmen die Paletten auf und verfügen über eine geführte Belade- und Entnahmevorrichtung, die sich unter den über dem Boden angeordneten Regalen bewegt. Über den Regalen verfährt eine zusätzliche geführte, portalartige Beschickungs- und Entnahmevorrichtung. Die Beschickungs- und Entnahmevorrichtung kann außerdem als ein unter den Regalen fahrbarer Hubtisch mit einer Vorrichtung zum Be- und Entladen der Paletten ausgeführt werden. Zur seitlichen Abstützung einer Plattform des Hubtisches können Führungen an den senkrechten Elementen der Regale befestigt werden. Ein Hubmechanismus eines Portalkrans kann durch Konsolen gebildet werden, die auf Stützen des Portals geführt werden. Diese Konsolen können in die vertikale Ebene der Stützen geschwenkt werden.

Aus der EP 2 995 579 A1 der Anmelderin ist eine Kommissioniereinrichtung bekannt, deren Regalfächer von einem Shuttlefahrzeugsystem anfahrbar sind. Dieses Shuttlefahrzeugsystem weist Transportshuttle auf, die entlang einer Längsachse der Regale verfahrbar sind und Querwagen oder ähnliche Transportmittel, die quer zur Längserstreckung der Regale verlaufen, über die die Übergabe-Regalfächer der Regale anfahrbar sind. Diese Übergabe-Regalfächer sind auch mittels der Transportshuttles des Shuttlefahrzeugsystems anfahrbar, die im Bereich der Fahrräume geführt sind.

Die US 2015/0225187 A1 offenbart ein Lagersystem mit mehreren Lagerbereichen, das für die Lagerung von Behältern ausgelegt ist. Im unteren Bereich der Lageranordnung sind Hubtransportvorrichtungen schienengebunden angeordnet. Diese Hubtransportvorrichtungen erreichen die untersten Regalfächer und übernehmen die Behälter aus diesen um sie quer zu den Regalen zu verfahren. Die Behälter werden durch weitere Vorrichtungen, die in den Regalzwischenräumen quer zu den Hubtransportvorrichtungen verfahrbar angeordnet sind, den Hubtransportvorrichtungen zugeführt. Diese Vorrichtungen sind ebenfalls schienengebunden und sind vertikal versetzt zu den Hubtransportvorrichtungen angeordnet. Es sind mehrere dieser Vorrichtung pro Regalzwischenraum übereinander verfahrbar vorgesehen um die gesamte Regalhöhe erreichen zu können. Sowohl das Beladen, als auch das Auslagern finden auf der gleichen, unten liegenden Ebene statt.

In der US 2016/0060037 A1 ist ein Lagersystem beschrieben, bei dem in Regalzwischenräumen in mehreren Ebenen schienengebundene Hubtransporteinrichtungen geführt sind. Quer zur Verfahrrichtung der Hubtransporteinrichtungen sind Behältertransportwagen verfahrbar, wobei diese ebenfalls in mehreren Ebenen entlang Schienen verfahrbar sind. Über diese Hebetransportwagen können Behälter einem Sequenzer zugeführt werden, über den das Ein- und Auslagern der Behälter steuerbar ist. Die US 2016/0060037 A1 offenbart eine Kommissioniereinrichtung nach dem Oberbegriff des Anspruchs 1.

Aus der DE 10 2009 017 241 A1 ist ein Lagersystem bekannt, bei dem mehrere Lagerebenen übereinander angeordnet sind. Zwischen jeder Lagerebene ist eine Bedienebene vorgesehen, in der Shuttle-Fahrzeuge verfahrbar angeordnet sind, um praktisch jedweden Einlagerungspunkt der darüber- oder darunterliegenden Ebene zu erreichen.

Problematisch bei den vorgenannten Lösungen ist, dass sich die Verfahrwege der einzelnen Transportvorrichtungen überschneiden können und dadurch Kollisionen nicht auszuschließen sind. Es ist ebenfalls nachteilig, dass mehrere übereinander angeordnete Transportvorrichtungen in den Regalzwischenräumen notwendig sind. Der steuerungs- und regelungstechnische Aufwand für derartige Anlagen ist sehr hoch.

Der Erfindung liegt dem gegenüber die Aufgabe zu Grunde, eine Kommissioniereinrichtung zu schaffen, deren Steuerung und Regelung bei hoher Effizienz gegenüber dem Stand der Technik vereinfacht ist.

Die Aufgabe wird durch eine Kommissioniereinrichtung mit den Merkmalen des Patentanspruchs 1 gelöst.

Vorteilhafte Weiterbildungen der Erfindung sind Gegenstand der Unteransprüche.

Die erfindungsgemäße Kommissioniereinrichtung hat eine Vielzahl von Regalen, die wiederum eine Vielzahl von Regalfächern haben, die parallel zueinander aufgestellt sind, wobei zwischen zwei benachbarten Regalen Fahrräume vorgesehen sind. In diesen Fahrräumen sind Regalbediengeräte verfahrbar. Die Regalbediengeräte sind derart ausgelegt, dass über sie die Regalfächer bei Entnahme oder Übernahme von Waren anfahrbar sind. Erfindungsgemäß hat die Kommissioniereinrichtung eine Vielzahl von Querwagen, die quer zu den Regalen verfahrbar sind, um Waren in ein Übergabefach zu übergeben oder aus diesem zu übernehmen. Die Waren werden über eine Beschickungsstation eingelagert und über eine Auslagerstation ausgelagert. Eine Vielzahl von oberen Querwagen sind in einer der Beschickungsstationen zugeordneten Beschickungsebene (auch Beladeebene genannt) geführt. Eine Vielzahl von unteren Querwagen sind in einer der Auslagerstation zugeordneten Auslagerebene geführt. Diese Auslagerebene ist zur Beschickungsebene beabstandet angeordnet. Erfindungsgemäß werden somit die Güter/ Gebinde/ Waren zum einen über Querwagen zu den Übergabefächern der Regale transportiert bzw. von dort abgeholt. Die eigentliche Verteilung im jeweiligen Regal erfolgt über die Regalbediengeräte.

Nach der Erfindung sind die Beladeebene im Bereich der obersten Regalfächer und die Auslagerebene im Bereich der untersten Regalfächer angeordnet.

Bei einem Ausführungsbeispiel befindet sich die Auslagerebene unterhalb der von den unteren Regalfächern aufgespannten Regalebene, z.B. auf einer Höhe von etwa 2200mm oberhalb des Hallenbodens.

Die Beladeebene ist vorzugsweise oberhalb einer von den obersten Regalfächern aufgespannten Regalebene angeordnet, z.B. auf einer Höhe von etwa 9000mm oberhalb des Hallenbodens.

In einer bevorzugten Ausführungsform fahren die oberen Querwagen Auslager-übergabefächer unterhalb der eigenen Verfahrebene an. Die unteren Querwagen fahren die Übergabefächer oberhalb der eigenen Verfahrebene an. Die oberen Querwagen fahren also die obersten Regalfächer als Übergabefächer an, während die unteren Querwagen die untersten Regalfächer als Übergabefächer anfahren.

Vorzugsweise sind die Querwagen als Gabelwagen ausgeführt und weisen in der Höhe verstellbare Lastaufnahmemittel auf.

Bevorzugt wird die Höhenverstellung der Lastaufnahmemittel an den Querwagen durch ein Teleskopsystem oder ein Zahnstangensystem durchgeführt.

Bei einem besonders bevorzugten Ausführungsbeispiel sind die Lastaufnahmemittel der Regalbediengeräte und/oder der Querwagen in der Breite verstellbar ausgeführt. Durch diese in der Breite verstellbar ausgebildeten Lastaufnahmemittel, die z.B. Gabeln sein können, lassen sich unterschiedlichste Waren und Gewinde aufnehmen und verfahren.

Unterhalb der Auslagerebene kann eine Palettentransportebene angeordnet sein, die sich z.B. etwa 500mm oberhalb des Hallenbodens befindet. Ein Palettentransport erfolgt demnach räumlich außerhalb des Wirkbereichs der Regalbediengeräte und Querwagen. Besonders bevorzugt ist es, wenn der Palettentransport in einem Bereich außerhalb eines durch die Regale begrenzten Bereichs erfolgt, insbesondere im Bereich eines Palletierers und Depalettierers vor den Regalen. Der Palettentransport kann auch mit automatisierten Flurförderfahrzeugen erfolgen.

Bevorzugt sind die oberen Querwagen in einer identischen Anzahl wie die unteren Querwagen an der Kommissioniereinrichtung ausgebildet.

Die Führung der Querwagen ist besonders vereinfacht, wenn die Querwagen schienengeführt sind.

Bei einem bevorzugten Ausführungsbeispiel sind die Regale als Regaldoppelreihen ausgeführt. Nur die äußersten Regale sind innerhalb der Kommissioniereinrichtung einzeln angeordnet. Diese Anordnung ermöglicht es, dass die Übergabefächer innerhalb der Regaldoppelreihen in jedem zweiten Regal angeordnet sind. Vorteilhafterweise lassen sich die Übergabefächer dadurch von den Querwagen kollisionsfrei anfahren um Gebinde in die Übergabefächer ein- und/oder auszuladen.

Ein Beispiel dieser Kommissioniereinrichtung wird im Folgenden anhand schematischer Zeichnungen näher erläutert. Es zeigen:
Figur 1 eine Schnittansicht eines Standardlagers mit einer erfindungsgemäßen Kommissioniereinrichtung;
Figur 2 einen Grundriss einer Beladeebene der Kommissioniereinrichtung;
Figur 3 einen Grundriss einer Auslagerebene der Kommissioniereinrichtung;
Figur 4 eine Palettentransportebene;
Figur 5 einen Querwagen mit Teleskopsystem;
Figur 6 einen Querwagen mit ausgefahrenem Zahnstangensystem;
Figur 7 einen Querwagen mit eingefahrenem Zahnstangensystem;
Figur 8 eine schematische Ansicht der Aufnahmemöglichkeiten der Regalbediengeräte;
Figur 9 eine Schnittansicht mit Phasen der Einlagerung;
Figur 10 eine Schnittansicht mit Phasen der Auslagerung;
Figur 11 eine Detailansicht einer Auslagerungsphase,
Figur 12 einen Querschnitt mit Phasen der Ein- und Auslagerung und
Figur 13 eine geschnittene Frontalansicht eines Ausschnitts einer Kommissioniereinrichtung.

Die im Folgenden beschriebene Kommissioniereinrichtung 1 ist beispielsweise Teil eines Standardlagers einer Verbrauchermarktkette, von dem aus Waren bzw. Gebinde 7 an die einzelnen Verbrauchermärkte verteilt werden.

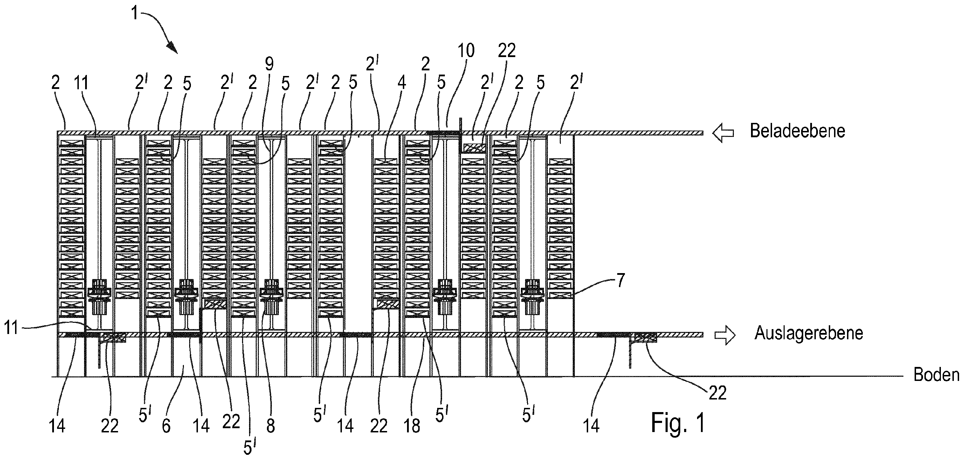

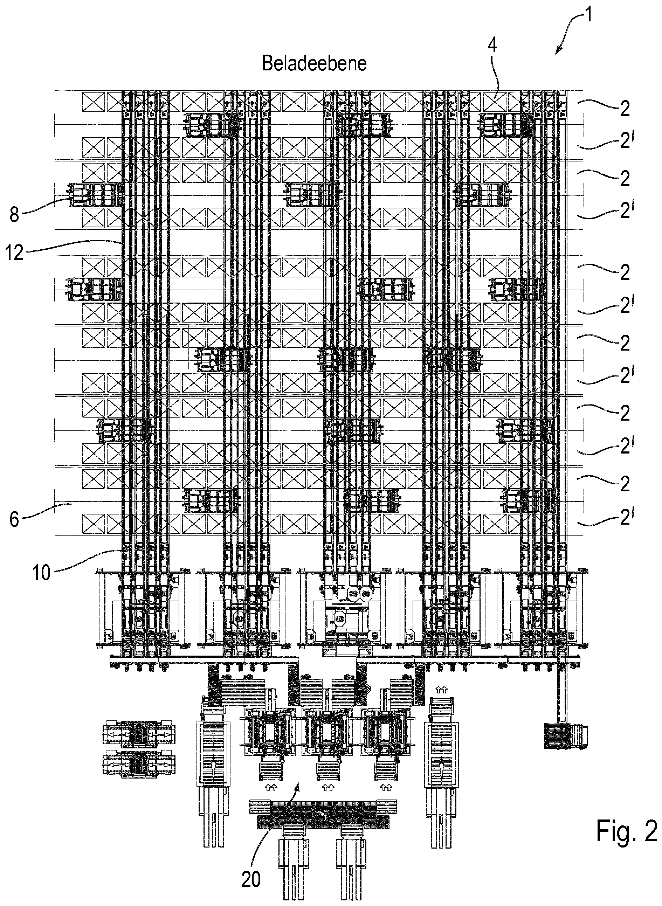

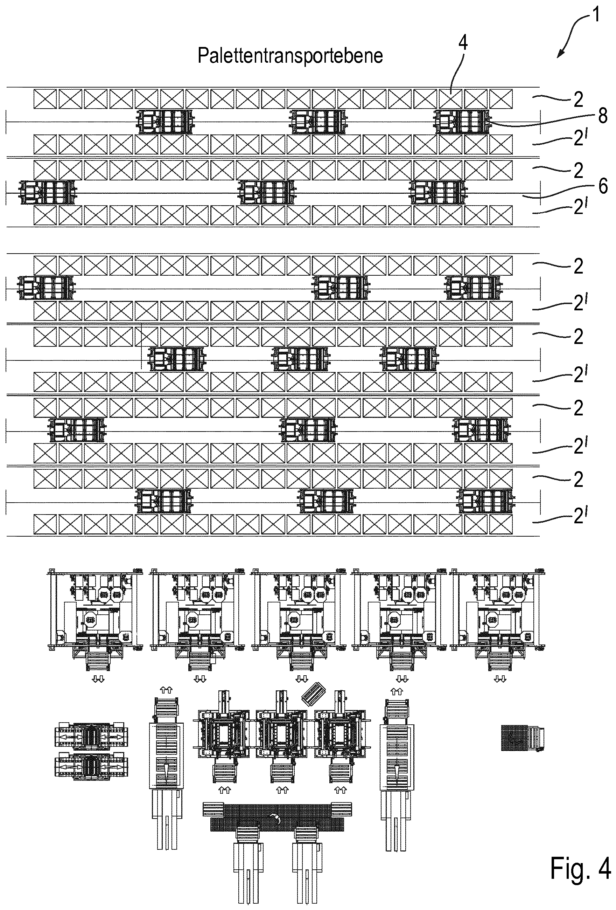

Ein derartiges Standardlager hat üblicherweise einen Wareneingang und einen Warenausgang, sowie Lagerräume für ein Trockensortiment, Fleisch, Tiefkühlkost sowie eine Obst- und Gemüsehalle. Jeder dieser Bereiche kann in der im Folgenden beschriebenen Weise als Kommissioniereinrichtung 1 ausgeführt sein. Bei dem im Folgenden beschriebenen Ausführungsbeispiel ist das Standardlager in einer Halle angeordnet und mit mehreren Ebenen, einer Beladeebene, einer Auslagerebene und einer Palettentransportebene dargestellt. Eine Seitenansicht des Standardlagers ist der Figur 1 zu entnehmen, während die Figuren 2, 3 und 4 jeweils Grundrisse der verschiedenen Ebenen zeigen.

Eine Seitenansicht eines derartigen Standardlagers ist in der Figur 1 gezeigt. Eine Vielzahl von Regalen 2, 2' ist parallel zueinander angeordnet. Die Regale 2, 2' sind in Metallbauweise als Rahmenkonstruktion ausgeführt und erstrecken sich von einem Boden aus in vertikaler Richtung bis in eine Höhe von beispielsweise 9000mm. Die Regale 2, 2' verfügen jeweils über eine Vielzahl von Regalfächern 4. Zwischen jeweils zwei Regalen 2 und 2', 2 und 2' usw. sind Fahrräume 6 vorgesehen, in denen Regalbediengeräte 8 verfahrbar sind.

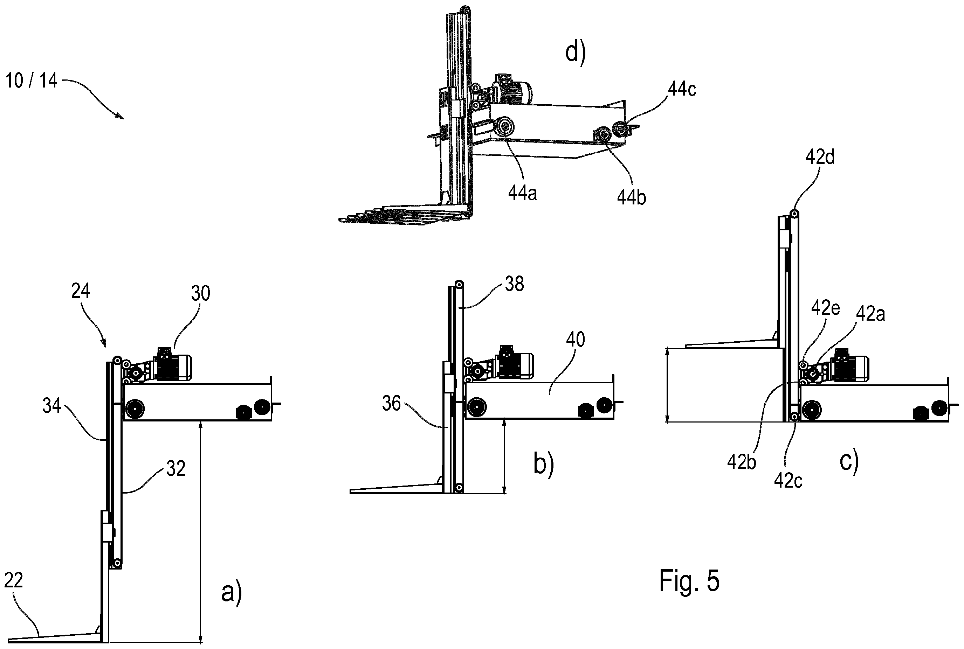

In der Seitenansicht der Figur 1 ist veranschaulicht, dass abschließend mit den Regalen 2, 2', also am obersten Ende der Regale 2, 2', eine Beladeebene angeordnet ist, die im Folgenden eingehender beschrieben wird. In der Beladeebene sind Querwagen 10 verfahrbar um eingehende Waren oder Gebinde 7 zur Einlagerung in die Regale 2 zu übergeben. Unterhalb der Regalfächer 4 ist eine Auslagerebene angeordnet. Die Auslagerebene befindet sich auf einer Höhe von etwa 2200mm. In der Auslagerebene unterhalb einer Regalabstützung 18 sind Querwagen 14 verfahrbar um kommissionierte Waren oder Gebinde 7 aus den Regalen 2 zu übernehmen und auszulagern. Die Querwagen 10, 14, die in den Figuren 5 bis 7 detaillierter beschrieben werden, weisen Lastaufnahmemittel 22 auf. Die Lastaufnahmemittel 22 sind mit den Querwagen über ein Teleskopsystem 24 oder ein Zahnstangensystem 26 verbunden.

Die Verteilung der Waren oder Gebinde 7 aus Übergabefächern 5 in die Regalfächer 4 innerhalb der Regale 2 wird von den Regalbediengeräten 8 durchgeführt. Die Regalbediengeräte 8 sind an einem entlang der Fahrräume 6 verfahrbaren Mast 9 vertikal verfahrbar angeordnet. Der Mast 9 ist zwischen der Beladeebene und der Auslagerebene geführt. Eine Führung 11 des Mastes 9 ist also am oberen Ende unterhalb der Beladeebene montiert und am unteren Ende oberhalb der Auslagerebene. Eine Kollision mit den Querwagen 10, 14 die in der Beladeebene und der Auslagerebene verfahren ist somit ausgeschlossen.

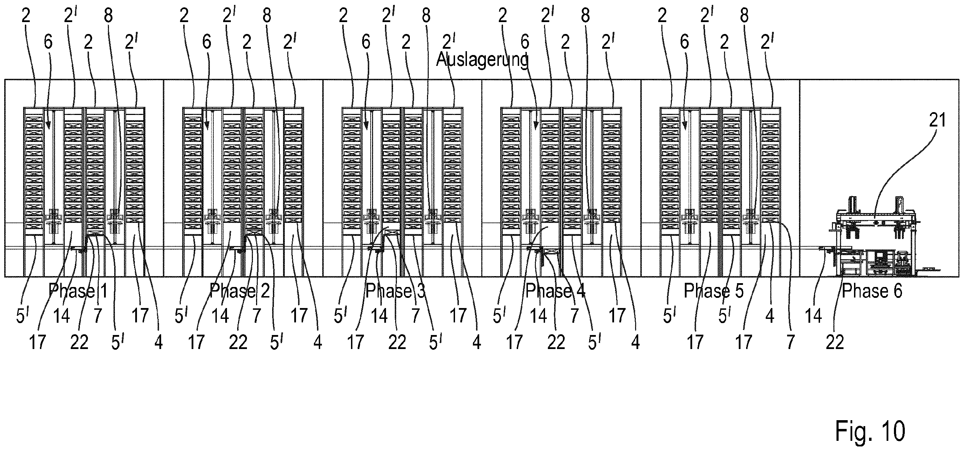

Die unteren Querwagen 14 verfahren so in der Auslagerebene, dass sie sich mit einem obersten Teil ihrer Konstruktion unterhalb der Regalabstützung 18 befinden. Die untersten Regalfächer 4 jedes zweiten Regals 2 sind als Übergabefächer 5' ausgelegt. Das Regalbediengerät 8 verfährt auszulagernde Gebinde 7 oder Waren aus einem der Regalfächer 4 in eines der Übergabefächer 5'. Dieser Vorgang wird detailliert in der Figur 10 gezeigt.

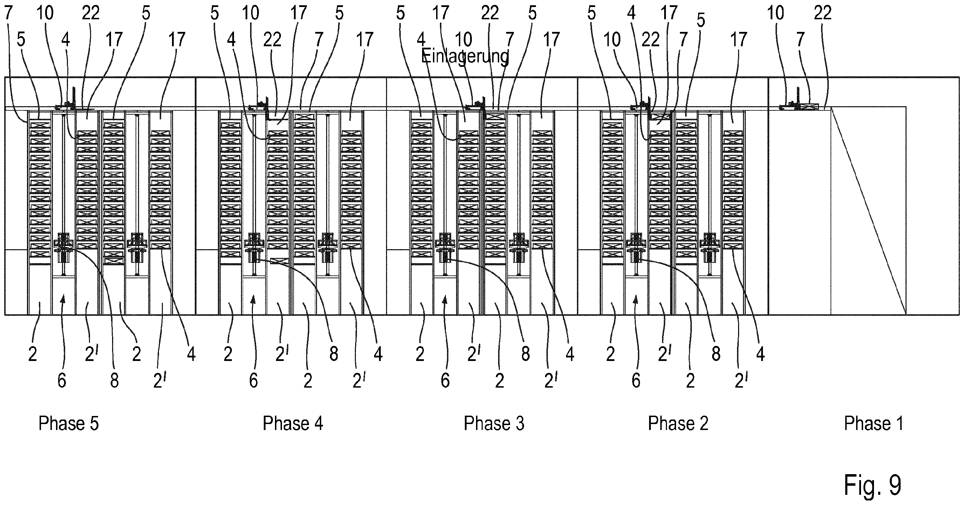

Die oberen Querwagen 10 verfahren so in der Beladeebene, dass sie sich mit einem untersten Teil ihrer Konstruktion oberhalb der obersten Regalfächer 4 befinden. Die obersten Regalfächer 4 jedes zweiten Regals 2 sind ebenfalls als Übergabefächer 5 ausgelegt. Dieser Vorgang wird detailliert in der Figur 9 gezeigt.

Sowohl die oberen Querwagen 10 als auch die unteren Querwagen 14 und auch deren jeweilige Lastaufnahmemittel 22 befinden sich zu keinem Zeitpunkt in einem Kollisionsbereich mit den Regalbediengeräten 8. Sofern die Lastaufnahmemittel 22 mit zu transportierenden Gebinden 7 beladen sind, befinden sich auch die Gebinde 7 außerhalb eines Wirkbereiches der Regalbediengeräte 8.

Die Kommissioniereinrichtung 1 hat gemäß dem Grundriss der Beladeebene in Figur 2 ein Regalsystem mit der Vielzahl von Regalen 2, 2'. Jedes dieser Regale 2, 2' hat eine Vielzahl von Regalfächern 4 zur Aufnahme von Tablaren, die im Folgenden näher beschrieben werden. Jedes dieser Tablare trägt in der Regel ein sortenreines Gebinde 7 derjenigen Waren, die in der erfindungsgemäßen Kommissionsiereinrichtung 1 zwischengepuffert werden soll.

Die Regale 2, 2' sind parallel zueinander angeordnet, wobei zwischen benachbarten Regalen, beispielsweise den Regalen 2 und 2', jeweils Fahrräume 6 verbleiben, in denen jeweils ein oder mehrere Regalbediengeräte 8 verfahrbar sind. D. h., diese Regalbediengeräte 8 bewegen sich parallel zu den jeweiligen Regalen 2, 2'. Quer zu den Regalen 2, 2' verfahrbar sind Querwagen 10 geführt. Diese Querwagen 10 sind entlang von Schienen 12 verfahrbar. Diese Schienen 12 sind oberhalb der Regale 2, 2' angeordnet.

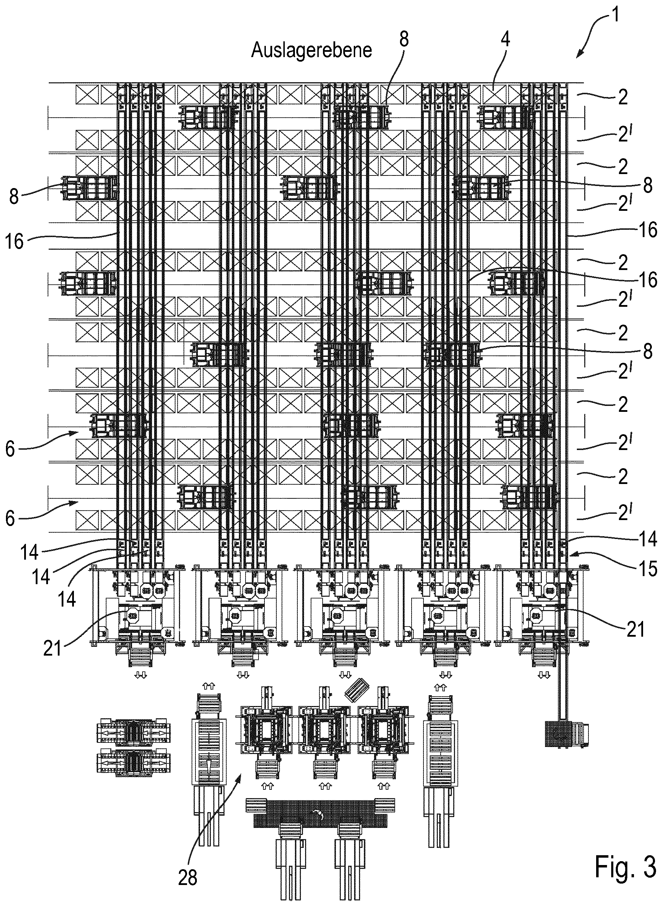

Gemäß Figur 3 ist ersichtlich, dass auch in der Auslagerebene Querwagen 14 an Schienen 16 geführt sind. Die Regale 2, 2' sind, wie bereits erwähnt, in Metallbauweise als Rahmenkonstruktion ausgeführt. Die Schienen 16 führen die Querwagen 14 unterhalb der Regalabstützung 18 (siehe Figur 1). Sowohl in der Beladeebene gemäß Figur 2 als auch in der Auslagerebene gemäß Figur 3 sind beim gezeigten Ausführungsbeispiel jeweils zwanzig Querwagen 10, 14 auf Schienen 12, 16 geführt verfahrbar. Jeweils 4 Querwagen 10, 14 sind dabei zu jeweils einer Querwagengruppe 13, 15 zusammengefasst, so dass gemäß diesem Ausführungsbeispiel fünf Querwagengruppen 13, 15 in der Ein- und Auslagerebene angeordnet sind. Wie erwähnt, verlaufen diese Schienen 12, 16 quer zur Längserstreckung der Regale 2, 2' in der Beladeebene bzw. in der Auslagerebene. Der Verfahrweg der oberen Querwagen 10 erstreckt sich dabei oberhalb der obersten Regalfächer 4 und der Übergabefächer 5 des Regals 2. Der Verfahrweg der unteren Querwagen 14 erstreckt sich unterhalb der untersten Regalfächer 4 und der Übergabefächer 5' des Regals 2.

Abgesehen von den äußersten Regalen 2, 2' sind die Regale 2, 2' als Regaldoppelreihen innerhalb der Kommissioniereinrichtung 1 angeordnet. Zwischen dein einzelnen Regalen 2, 2' verfahren gemäß dem vorliegenden Ausführungsbeispiel jeweils drei Regalbediengeräte 8 in den so gebildeten Fahrräumen 6. Durch die Mehrzahl von Regalbediengeräten 8 innerhalb eines Fahrraums 6 ist sowohl die Flexibilität der Kommissioniereinrichtung 1, als auch der mögliche Gesamtdurchsatz an Waren und Gebinden 7 erhöht. Die Regalbediengeräte 8 übernehmen die Gebinde 7 aus den oberen Übergabefächern 5 und lagern diese in zugeordneten Regalfächern 4 ein. Die Einlagerung wird im Folgenden in Figur 9 näher erläutert. Bei einem Abruf der Gebinde 7 zur Auslagerung verfahren die Regalbediengeräte 8 die Gebinde 7 aus den Regalfächern 4 in die unteren Übergabefächer 5'. Der Auslagerungsprozess wird im Folgenden an Hand der Figur 10 näher erläutert.

Jedes Regalbediengerät 8 ist zumindest für zwei Querwagengruppen 13, 15 zuständig. Zuständig meint in diesem Zusammenhang, dass der Wirkbereich eines jeden Regalbediengerätes 8 sich zumindest über die Breite erstreckt, die zwei Querwagengruppen 13, 15 und deren Schienen 12, 16 einnehmen. Gemäß dem vorliegenden Ausführungsbeispiel stehen die jeweils außen angeordneten Regalbediengeräte 8 in Wirkeingriff mit jeweils zwei Querwagengruppen 13, 15, während das mittig zwischen den beiden anderen Regalbediengeräten 8 angeordnete Regalbediengerät 8 mit drei Querwagengruppen 13, 15 in Wirkeingriff steht. Durch diese Zuordnung ist eine erhöhte Flexibilität bei einer gleichzeitig abnehmenden Kollisionsgefahr durch parallele Bearbeitung von ein- und auszulagernden Gebinden 7 ermöglicht.

Selbstverständlich sind je nach Größe und Anforderungen der Kommissioniereinrichtung 1 geänderte Anordnungen möglich. Sowohl die Anzahl der Querwagen 10, 14 innerhalb einer Querwagengruppe 13, 15, als auch die Summe der Querwagengruppen 13, 15, ist frei festlegbar. Somit sind Querwagengruppen 13, 15 mit lediglich zwei Querwagen 10, 14, als auch mit bis zu zehn Querwagen 10, 14 umsetzbar. Entsprechend lässt sich auch die Anzahl der Querwagengruppen 13, 15 und der Regalbediengeräte 8 ohne weiteres verringern oder erhöhen.

Die Regale 2, 2' sind am Boden abgestützt, bzw. "aufgeständert". In jedem der Fahrräume 6 zwischen den Regalen 2. 2' sind, wie bereits ausgeführt, jeweils drei Regalbediengeräte 8 verfahrbar. Über diese Regalbediengeräte 8 kann, wie im Folgenden noch näher erläutert wird, jedes Regalfach 4 und jedes Übergabefach 5, 5' der benachbart zu den Fahrräumen 6 angeordneten Regale 2, 2' erreicht werden.

Der Wareneingang erfolgt über Entladestationen und Depalettierstationen in der Beladeebene. Der Warenausgang erfolgt über Beladestationen und Palettierstationen, die in der Auslagerebene angeordnet sind.

Die sortenreine Ware wird auf Paletten angeliefert und einem Depalettierer 20 in der Beladeebene zugeführt. In dem Depalettierer 20 werden die Waren bzw. Gebinde 7 auf herkömmliche Art und Weise vereinzelt. Nach der Vereinzelung werden die Gebinde 7 den oberen Querwagen 10 zugeführt. Diese Querwagen 10, sowie die unteren Querwagen 14, sind als Gabelwagen ausgeführt.

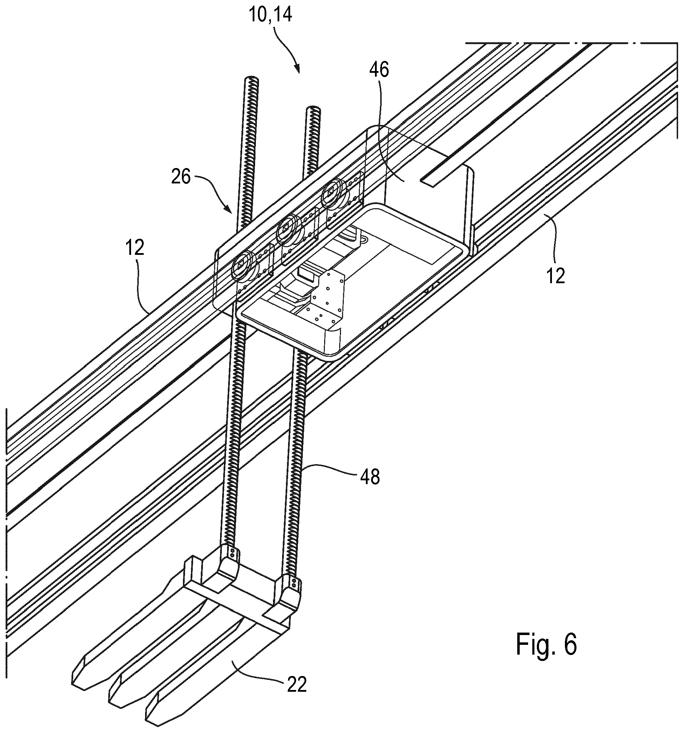

In Figur 5 ist ein Beispiel eines solchen Gabelwagens gezeigt, der über ein Teleskopsystem 24 die Lastaufnahmemittel 22, also die Gabeln, in der Höhe verstellen kann. In einer neutralen Position, also in einem nicht ausgefahrenen Zustand des Teleskopsystems 24, sind die Lastaufnahmemittel 22 oberhalb der Regale 2, 2' verfahrbar. Aus dieser Position lassen sich die Lastaufnahmemittel 22 über das Teleskopsystem 24 nach unten verfahren, die Lastaufnahmemittel 22 sind also nach unten, zwischen die Regale 2, 2' verfahrbar. Anstelle des Teleskopsystems 24 gemäß Figur 5 ist auch ein Zahnstangensystem 26, wie in der Figur 6 gezeigt, denkbar.

Der Querwagen 10, 14 in Figur 5 ist mit dem oben genannten Teleskopsystem 24 ausgestattet. Das Teleskopsystem 24 weist einen Antrieb 30 auf, beispielsweise eine elektrische Maschine, der beispielsweise einen Riemen 32 antreibt. Anstatt eines Riemens 32 sind natürlich auch eine Kette oder ähnliche kraftübertragende und umlenkbare Teile denkbar. Der angetriebene Riemen 32 bewegt einen Rahmen 36 entlang einer Führung 34. Zusätzlich zu dem Rahmen 36 ist ein Holm 38 durch den Riemen 32 vertikal entlang des Gehäuses 40 des Querwagens 10, 14 verfahrbar. Der Riemen wird entlang mehrerer Umlenkrollen 42 geführt und überträgt die Drehbewegung des Antriebs 30 in eine Linearbewegung des Rahmens 36 und/oder des Holms 38.

Entlang der Außenseite des Gehäuses 40 sind Laufräder 44 montiert. Diese Laufräder 44 sind in den Schienen 12, 16 geführt. Konkret zeigt die Figur 5 einen oberen Querwagen 10. Der Antrieb 30 ist oberhalb des Gehäuses 40 montiert, während die Laufräder 44 an der Unterseite der Außenwände des Gehäuses 40 befestigt sind. Die Lastaufnahmemittel 22 sind derart angeordnet, dass sie weiter nach unten als nach oben verfahrbar sind.

Die unteren Querwagen 14 sind prinzipiell vergleichbar aufgebaut, gespiegelt an der Unterseite der Lastaufnahmemittel 22. Dabei sind die Lastaufnahmemittel 22 weiter nach oben als nach unten verfahrbar. Der Antrieb 30 ist dann unterhalb des Gehäuses 40 montiert, während die Laufräder 44 an der Oberseite der Außenwände des Gehäuses 40 befestigt sind. Unabhängig davon ob der Querwagen 10, 14 in der Beladeebene oder in der Auslagerebene eingesetzt wird, ist der Antrieb 30 jeweils auf der dem Regal 2 abgewandten Seite des Gehäuses 40 befestigt.

In der Figur 5c ist der Querwagen 10, 14 in einer Verfahrstellung gezeigt. Die Lastaufnahmemittel 22 befinden sich außerhalb der Regale 2, 2' und der Regalfächer 4. In dieser Verfahrstellung können die Querwagen 10, 14 kollisionsfrei quer zur Längsachse der Regale 2, 2' verfahren. Ausgehend von dieser Verfahrstellung lassen sich durch betätigen des Antriebs 30 die Lastaufnahmemittel 22 stufenlos verfahren. Der Rahmen 36 bewegt sich vertikal entlang der Führung 34 abwärts, bis sich die Unterseite der Lastaufnahmemittel 22 etwa mit der Umlenkrolle 42c auf einer horizontalen Ebene befindet. Ab diesem Zustand verfährt der Rahmen 36 zunächst nicht mehr entlang der Führung 34. Der Holm 38 verfährt in gleicher Richtung, also nach unten, entlang des Querwagens 10, 14, bis der Holm 38 seinen maximalen Verfahrweg in diese Richtung erreicht hat. Dies ist der Fall, sobald die Oberseite des Holms 38 in etwa auf Höhe der Umlenkrolle 42e liegt. Anschließend lässt sich der Rahmen 36 weiter entlang der Führung 34 absenken, bis eine maximale Auslegung, beim gezeigten Ausführungsbeispiel etwa 1200mm, gemessen von der Unterseite des Gehäuses 40 bis zur Unterseite der Lastaufnahmemittel 22, erreicht ist.

Selbstverständlich lassen sich durch geeignete Maßnahmen in der Anordnung auch andersartig steuerbare Relativbewegungen zwischen den einzelnen Bauteilen erzielen, wie beispielsweise eine ausschließliche Verschiebung des Rahmens 36 entlang der Führung 34, oder eine ausschließliche Verschiebung des Holms 38 gegenüber des Gehäuses 40.

Wenn es sich bei dem Antrieb 30 um eine elektrische Maschine handelt, lässt sich durch Ändern der Drehrichtung der im vorhergegangenen Absatz beschriebene Vorgang umkehren. Ausgehend von einer maximalen Auslegung gemäß Figur 5a verfährt der Rahmen 36 entlang der Führung 34 bis die Lastaufnahmemittel 22 die horizontale Ebene der Umlenkrolle 42c erreichen, der Rahmen 36 verfährt erst weiter entlang der Führung 34, wenn der Holm 38 mit seinem untersten Punkt, also etwas unterhalb der Umlenkrolle 42c, etwa die horizontale Ebene der dem Regal 2, 2' zugewandten Seite des Gehäuses 40 des Querwagens 10, 14, erreicht. Auch beim Einfahren des Teleskopsystems 24 ist eine abgewandelte Relativbewegung der Bauteile untereinander denkbar.

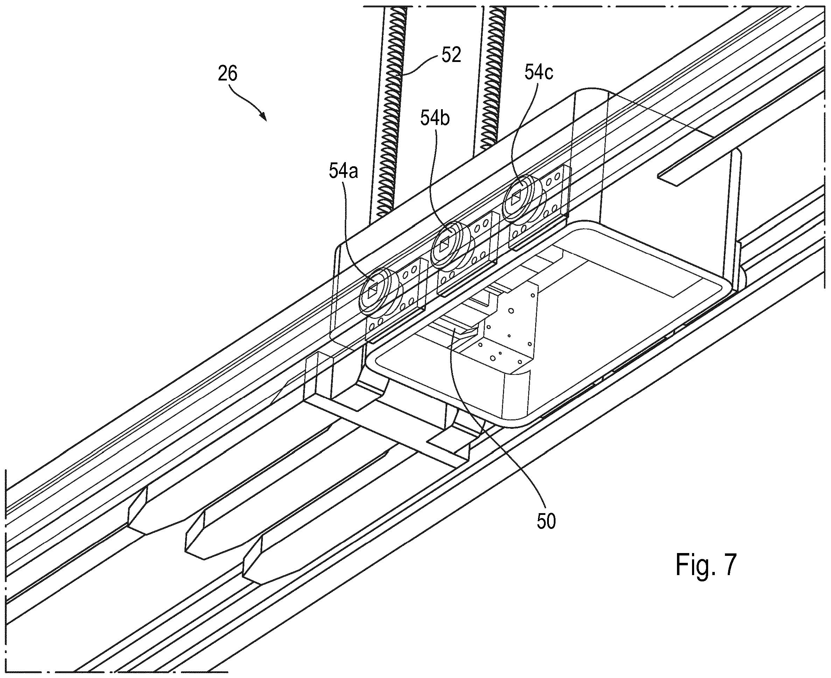

Alternativ zu einem Teleskopsystem 24 ist auch ein Zahnstangensystem 26 zum vertikalen Verfahren der Lastaufnahmemittel 22 der Querwagen 10, 14 denkbar. Ein derartiges Zahnstangensystem 26 ist beispielsweise in den Figuren 6 und 7 gezeigt. An einer Seite in Verfahrrichtung des Querwagens 10, 14 sind in einem Abstand zueinander zwei Zahnstangen 48 in vertikaler Richtung verfahrbar an einem Gehäuse 46 angebracht. Die Zahnstangen haben eine Vielzahl von identisch zueinander beabstandeten Ritzeln 52. Ein Antrieb 50 zum Verfahren der Zahnstangen 48 ist in einem Gehäuse 46 angeordnet. Der schienengebundene Querwagen 10, 14 weist auf beiden Längsseiten des Gehäuses 46 drei Laufräder 54 auf.

Der Antrieb 50, beispielsweise eine elektrische Maschine, treibt zum Beispiel eine Welle 56 mit zwei Zahnrädern 58 (beides nicht gezeigt) an, wobei die Zahnräder 58 im Eingriff mit den Ritzeln 52 der Zahnstangen 48 sind. Alternativ ist auch ein einzelnes, breites Zahnrad 58 denkbar, das mit beiden Zahnstangen 48 im Eingriff ist, oder ein anderes System zum Bewegen einer Zahnstange 48.

Durch den Antrieb 50 werden die Zahnräder 58 in eine Drehbewegung versetzt und verfahren durch den Eingriff in die Ritzel 52 der Zahnstangen 48 selbige aus einer Verfahrstellung, die in Figur 7 dargestellt ist, wobei sich die Unterseite der Lastaufnahmemittel 22 auf einer horizontalen Ebene mit der Unterseite des Gehäuses 46 des Querwagens 10, 14 befindet, wodurch ein kollisionsfreies Verfahren quer zur Längsachse der Regale 2, 2' möglich ist, in eine in Figur 6 dargestellte Stellung. Die Stellung in Figur 6 stellt die Lastaufnahmemittel 22 in einem Bereich innerhalb der Fahrgänge 6 der Regale 2, 2' dar (nicht gezeigt).

Konkret ist sowohl in Figur 6 als auch in Figur 7 ein oberer Querwagen 10 gezeigt, der in der Beladeebene verfährt. Die Lastaufnahmemittel 22 sind verschiebbar in Richtung der Auslagerebene, also nach unten, dargestellt. Die Zahnstangen 48 stehen in der Verfahrstellung aus dem Querwagen 10 nach oben ab, also in Richtung der von den Regalen 2, 2' abgewandten Seite. Wie auch beim Teleskopsystem 24 sind die Querwagen 10, 14 in der Auslagerebene identisch ausgeführt. Hier werden sie gespiegelt zu den in der Beladeebene verfahrenden in die Schienen 16 eingesetzt, so dass die Lastaufnahmemittel 22 aus der Verfahrposition nach oben, also in Richtung der Beladeebene, verfahrbar sind und die Zahnstangen 48 nach unten überstehen, in Richtung Boden.

Die Regalbediengeräte 8 und/oder die Querwagen 10, 14 weisen in der Breite verstellbare Lastaufnahmemittel 22 auf. So lassen sich Waren oder Gebinde 7 mit unterschiedlichen Abmessungen ideal handhaben und in die Regalfächer 4 einlagern, bzw. aus diesen auslagern.

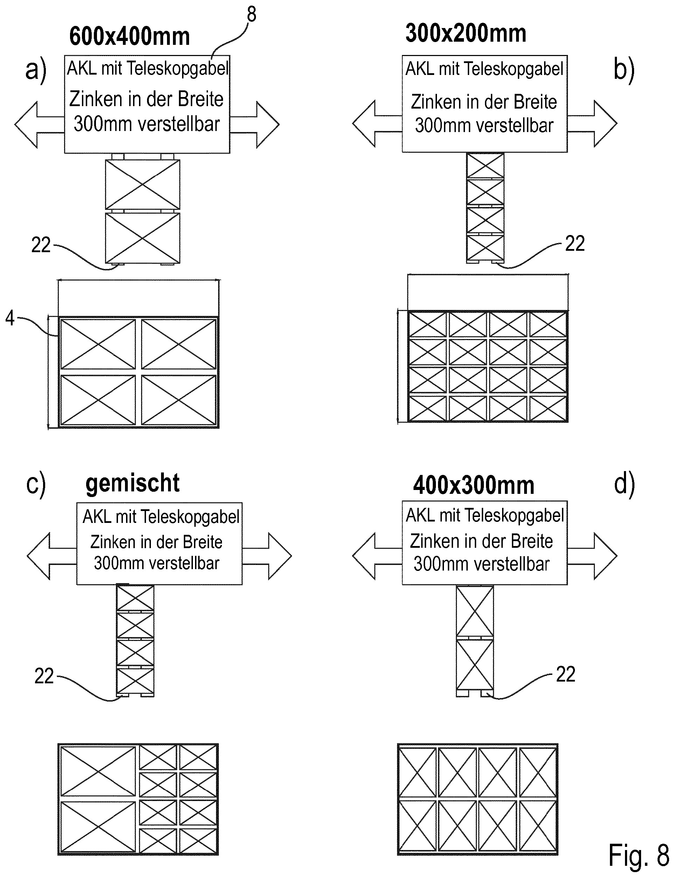

Wie in Figur 8 veranschaulicht, sind die Gabeln, also die Lastaufnahmemittel 22, der Regalbediengeräte 8 in der Breite verstellbar ausgeführt bei gleichbleibende Länge. Die Ausgangsbreite, also die Minimalbreite der Lastaufnahmemittel 22 der Regalbediengeräte 8, liegt bei etwa 300 mm und lässt sich um bis zu 300 mm auf eine Maximalbreite von etwa 600 mm verbreitern. Die Verstellung der Breite kann beispielsweise über ein Teleskopsystem realisiert werden. In dem vorliegenden Ausführungsbeispiel sind Regalfächer 4 mit den Abmessungen 1300mm Breite und 900mm Tiefe vorgesehen.

Gemäß Figur 8a lassen sich in ein derartiges Regalfach 4 vier Gebinde 7 z.B. mit den Abmessungen 600x400mm ein- oder auslagern. Das Regalbediengerät 8 hat die Lastaufnahmemittel 22 so weit verbreitert, dass die Außenseiten randnah an den Gebinden 7 angreifen, also z.B. auf eine Breite von annähernd 600mm. Zwei Gebinde 7 passen hintereinander auf die Lastaufnahmemittel 22.

In Figur 8b sind Gebinde 7 mit wesentlich kleineren Abmessungen, z.B. 300x200mm, zur Aufnahme oder Übergabe aus/an das Regalfach 4 vorgesehen. Um die schmalen Gebinde 7 sicher zu transportieren sind die Lastaufnahmemittel 22 auf ihren Minimalabstand von etwa 300mm zusammengeführt. Bei einer Gebindetiefe von 200mm passen vier Gebinde 7 hintereinander auf die Lastaufnahmemittel 22.

Auch mit unterschiedlichen Gebinden 7 belegte Regalfächer 4 sind gemäß Figur 8c umsetzbar. In diesem Beispiel sind zwei Gebinde 7 gemäß Figur 8a und vier Gebinde 7 gemäß Figur 8b in einem Regalfach 4 untergebracht. Dies lässt sich auf Grund der Flexibilität der Breite der Lastaufnahmemittel 22 in jedem Regalfach 4 umsetzen. So lässt sich eine maximale Ausnutzung der Kapazität des Standardlagers in Abhängigkeit von der Kommissionierung erzielen, da unabhängig von der Gebindegröße die Regalfächer 4 nutzbar sind.

Figur 8d zeigt ein weiteres Beispiel eines Regalfachs 4 mit Gebinden 7 der Abmessung 400x300mm.

Die obersten Regalfächer 4 der Regale 2 sind Übergabefächer 5. Die Querwagen 10 übergeben die sich auf den Querwagen 10 befindlichen Gebinde 7 an die jeweiligen Übergabefächer 5. Die Übergabefächer 5 befinden sich also direkt unterhalb der Beladeebene, welche sich z.B. auf etwa 9000 mm Höhe über dem Boden befindet. Nachdem die Gebinde 7 von dem Querwagen 10 an die Übergabefächer 5 übergeben wurden, verfahren die Regalbediengeräte 8 an die Übergabefächer 5, nehmen die Gebinde 7 auf und lagern sie in den dafür vorgesehenen Regalfächern 4 ein.

Wie bereits erwähnt, sind mehrere Regalbediengeräte 8 in den jeweiligen Fahrräumen 6 zwischen den Regalen 2, 2' angeordnet. Durch diese Anordnung müssen die einzelnen Regalbediengeräte 8 nur einen kleinen Teil des Fahrraums 6 bearbeiten und bieten daher eine sehr hohe Flexibilität. Über die Regalbediengeräte 8 kann jedes Regalfach 4 der benachbart zu den Fahrräumen 6 angeordneten Regale 2, 2' erreicht werden.

In den untersten Regalfächern 4 der Regale 2 sind ebenfalls Übergabefächer 5' angeordnet. Diese Übergabefächer 5' befinden sich also knapp oberhalb der Auslagerebene, deren Grundriss in Figur 3 dargestellt ist. Die Auslagerung der Gebinde 7 findet je nach Kommissionierung in dieser Auslagerungsebene statt, wobei die Auslagerungsebene auf einer Höhe von z.B. etwa 2200 mm oberhalb des Hallenbodens liegt. Die Regalbediengeräte 8 fahren die Regalfächer 4 mit den auszulagernden Gebinde 7 an, entnehmen diese aus dem Regalfach 4, und verfahren die Gebinde 7 in die Übergabefächer 5' direkt über der Auslagerebene. Die auslagerungsseitigen also unteren Querwagen 14 übernehmen die Gebinde 7 und führen diese dem Belader 28 zu.

Die unteren Querwagen 14 sind, genau wie die oberen Querwagen 10, an strangförmig geführten Schienen 12, 16 geführt. Sowohl in der Beladeebene als auch in der Auslagerebene sind beim gezeigten Ausführungsbeispiel zwanzig derartiger Querwagen 10, 14 verfahrbar. Die Schienen 12, 16 sind in fünf strangförmig zusammengefassten Bereich aufgeteilt. In jedem dieser Bereiche sind vier Querwagen 10, 14 positioniert. Sowohl eine andere Anzahl als auch eine andere Aufteilung von Querwagen 10, 14 und Schienen 12, 16 ist selbstverständlich denkbar.

Mit anderen Worten gibt es oberhalb der Beladeebene ein Querwagensystem mit Querwagengruppen 13, bestehend aus Querwagen 10 und Schienen 12 und ein unterhalb der Auslagerebene liegendes Querwagensystem mit Querwagengruppen 15 bestehend aus Querwagen 14 und Schienen 16. Beide Querwagensysteme verfahren quer zur Längsrichtung der Regale 2, 2'. Diese beiden Querwagensysteme bedienen jeweils nur die entweder ganz oben liegenden Übergabefächer 5 oder die ganz unten liegenden Übergabefächer 5' der Regale 2. Die Gebindehandhabung innerhalb der Regalfächer 4 erfolgt ausschließlich über die Regalbediengeräte 8.

Figur 9 zeigt schematisch fünf Phasen der Einlagerung von Gebinden 7 in die Regale 2. Die Phasen sind von rechts nach links zu betrachten. In der Beladeebene verfahren bekanntermaßen die Querwagen 10. In einer nicht dargestellten Übergabestation, die an den Depalettierer 20 angeschlossen ist, übernehmen die Querwagen 10, in dieser Figur 9 ist exemplarisch ein Querwagen 10 gezeigt, in einer ersten Phase die einzulagernden Gebinde 7 mit ihren Lastaufnahmemitteln 22. In der Verfahrstellung, siehe Figur 5c, verfährt der Querwagen 10 mit dem Gebinde 7 in eine Position oberhalb eines der Regale 2'.

In einer sich daran anschließenden zweiten Phase wird das Gebinde 7 auf eine Einlagerhöhe knapp oberhalb eines Regalbodens eines Übergabefaches 5 abgesenkt. Dazu senkt der Querwagen 10 seine Lastaufnahmemittel 22 in ein Regal 2' ab, das im obersten Bereich, in diesem Ausführungsbeispiel im Bereich der obersten beiden Regalfächer 4 bzw. Übergabefächer 5, keine Regalböden aufweist. Ein Absenken der Lastaufnahmemittel 22 ist somit im Bereich des Regals 2' möglich, ohne dass die Lastaufnahmemittel 22 mit den Regalbediengeräten 8 in den Fahrräumen 6 eben dieser kollidieren kann. Die Lastaufnahmemittel 22 befinden sich am Ende der zweiten Phase mit ihrer Oberseite knapp oberhalb eines Regalbodens der Übergabefächer 5. Die Lastaufnahmemittel 22 und das einzulagernde Gebinde 7 befinden sich also vollständig in einem Regal 2' der Regaldoppelreihe, das kein Übergabefach 5 aufweist, sondern einen unbelegten Bereich 17.

Eine anschließende dritte Phase zeigt das Einfahren der Lastaufnahmemittel 22 der Querwagen 10 in das anschließende Übergabefach 5, das in diesem Ausführungsbeispiel rechts neben dem Regal 2' angeordnet ist, in dem das Ablassen der zweiten Phase erfolgt. Das auf den Lastaufnahmemitteln 22 aufliegende Gebinde 7 wird in das Übergabefach 5 verfahren. Die Lastaufnahmemittel 22 senken sich auf eine Höhe in dem nicht durchgehenden Regalboden des Übergabefaches 5 ab, so dass das Gebinde 7 in einem dafür vorgesehenen Auflagebereich des Übergabefaches 5 aufliegt, während die Lastaufnahmemittel 22 nicht mehr mit dem Gebinde 7 in Kontakt sind.

In der letztgenannten Position verfährt der Querwagen 10 in einer vierten Phase soweit aus dem Übergabefach 5 heraus, dass sich die Lastaufnahmemittel 22 wieder in dem linken Regal 2' befinden, ohne im Fahrraum 6 der Regalbediengeräte 8 zu sein. Dabei befinden sich die Lastaufnahmemittel 22 in einer ähnlichen Position wie in der zweiten Phase.

Im Anschluss an das Ausfahren aus dem Übergabefach 5 wird der Querwagen 10 mit den Lastaufnahmemitteln 22 wieder in seine Verfahrstellung gebracht. Anschließend kann der Querwagen wieder an die Übergabestation verfahren um das nächste Gebinde 7 zu übernehmen und wieder mit Phase eins der Einlagerung zu beginnen.

Der gesamte Aufbau ist selbstverständlich auch spiegelbildlich zu diesem Ausführungsbeispiel umsetzbar.

Figur 10 zeigt schematisch sechs Phasen der Auslagerung von Gebinden 7 aus den Regalen 2 und das Übergeben der Gebinde 7 an einen Palettierer 21. Die Phasen sind von links nach rechts zu betrachten. Querwagen 14 verfahren in der Entladeebene und transportieren die Gebinde 7 aus den unteren Übergabefächern 5' hin zu dem Palettierer.

In einer ersten Phase der Auslagerung verfährt der Querwagen 14 derart in eine Position, dass sich die Lastaufnahmemittel 22 unterhalb eines, in diesem Ausführungsbeispiel des linken, Regals 2' befindet, dass keine Übergabefächer 5' hat. Die Übergabefächer 5' in der Auslagerebene befinden sich wie in der Beladeebene nur in jeweils einer Reihe der die Regaldoppelreihen bildenden Regale 2, 2', in diesem Ausführungsbeispiel der rechten. Aus dieser Position werden die Lastaufnahmemittel 22 senkrecht nach oben in das Regal 2' verfahren, bis sie sich auf der Höhe des Regalbodens eines der Übergabefächer 5' befinden. Anschließend verfährt der Querwagen 14 nach rechts um die Lastaufnahmemittel 22 in den nicht durchgehenden Regalboden des Übergabefachs 5' zu verfahren. So befinden sich die Lastaufnahmemittel 22 direkt unterhalb des zu übernehmenden Gebindes 7, wie in der ersten Phase der Figur 10 dargestellt.

In einer zweiten Phase der Auslagerung werden die Lastaufnahmemittel 22 leicht nach oben verfahren um das Gebinde 7 vom Regalboden des Übergabefachs 5' abzuheben.

Eine dritte Phase ist gekennzeichnet durch das Herausfahren des Gebindes 7 aus dem Übergabefach, wobei sich das Gebinde 7 auf den Lastaufnahmemitteln 22 befindet. Durch Verfahren des Querwagens 14 nach links werden die Lastaufnahmemittel 22 wieder in das linke Regal 2' gebracht, in dem sich keine Übergabefächer 5' befinden.

Da keine Regalböden den Verfahrweg behindern, können die Lastaufnahmemittel 22 mit dem Gebinde 7 senkrecht nach unten verfahren werden. Dadurch befindet sich der Querwagen 14 in seiner bekannten Verfahrposition unterhalb der Fahrräume 6 der Regalbediengeräte 8. Auch das Gebinde 7 befindet sich unterhalb eines möglichen Kollisionsbereichs.

In dieser Verfahrposition verfährt der Querwagen 14 mit dem Gebinde 7 aus dem Regalbereich, wie in einer fünften Phase gezeigt um in einer abschließenden sechsten Phase das Gebinde 7 an den Palettierer 21 zu übergeben. Nach der Übergabe des Gebindes 7 kann der Querwagen 14 wieder in den Regalbereich verfahren um das nächste Gebinde 7 aus dem nächsten Übergabefach 5' zu übernehmen.

Der gesamte Aufbau ist selbstverständlich ebenfalls spiegelbildlich zu diesem Ausführungsbeispiel umsetzbar.

Sowohl für die Figur 9 als auch für die Figur 10 gilt, dass diese nur jeweils einen Querwagen 10, 14 zeigen um eine vereinfachte Form der Darstellung zu gewährleisten. Selbstverständlich sind die gezeigten Querwagen 10, 14 Teil einer Querwagengruppe 13, 15, die jeweils in mehreren Querwagengruppen 13, 15 innerhalb der Beladeebene und der Auslagerebene einer Kommissioniereinrichtung 1 angeordnet sind.

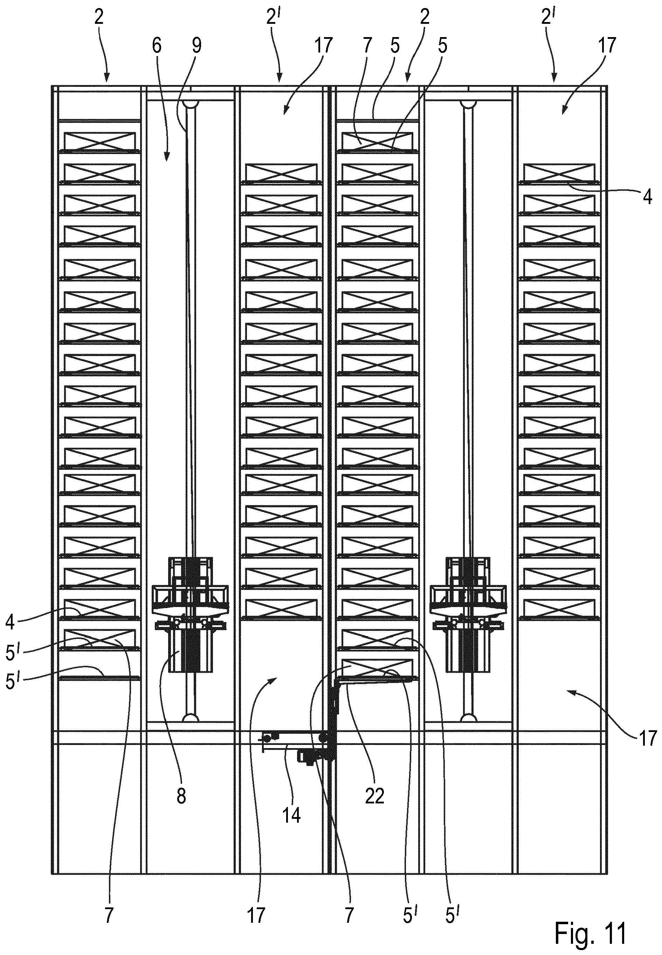

Figur 11 zeigt eine Detailansicht einer Auslagerungsphase, genauer der ersten Phase der Auslagerung. Der grundsätzliche Aufbau der Regale 2, 2' und damit auch der Regaldoppelreihen wird hier ebenfalls verdeutlicht. Die Regaldoppelreihen sind derart angeordnet, dass sich in einem der Regale 2 oberhalb und unterhalb der Regalfächer 4 Übergabefächer 5, 5' befinden, während das andere Regal 2' ausschließlich Regalfächer 4 hat und auf Höhe der Übergabefächer 5, 5' des anschließenden Regals 2 keine Fächer, Böden oder Ähnliches aufweist. So ist es den Querwagen 14, wie vorstehend beschrieben, möglich, die Übergabefächer 5' des einen Regals 2 anzufahren, indem es die Lastaufnahmemittel 22 durch das andere Regal 2', also innerhalb eines unbelegten Bereichs 17, auf die Höhe der Übergabefächer 5' fährt, ohne dass sich die Querwagen 14 in Fahrräumen 6 der Regalbediengeräte 8 und damit in einem potentiellen Kollisionsbereich mit diesen befinden. Die oberen Querwagen 10 sind in Figur 11 nicht gezeigt, die Verfahrwege zum Beladen der Übergabefächer 5 entsprechen in gespiegelter Weise aber denen der unteren Querwagen 14, so dass eine weitere Detailansicht der oberen Querwagen 10 nicht notwendig ist.

An Hand der Figur 11 lässt die Ein- und Auslagerung der Gebinde 7 innerhalb der Regale 2, hier in einer seitlichen Ansicht, verdeutlichen. Einer der nicht gezeigten oberen Querwagen 10 transportiert die Gebinde 7 und platziert diese in den oberen Übergabefächern 5. Ab dem Zeitpunkt der vierten Phase der Einlagerung, also dem Ausfahren der Lastaufnahmemittel 22 aus dem Übergabefach 5, kann das Gebinde 7 von einem der in dem Fahrraum 6 verfahrenden Regalbediengeräte 8 übernommen werden und in ein dafür vorgesehenes Regalfach 4 eingelagert werden. Sobald ein Gebinde 7 ausgelagert werden soll, wird dieses wiederum von einem der Regalbediengeräte 8 aus dem Regalfach 4 entnommen und in eines der unteren Übergabefächer 5' übergeben. Dieses wird in vorbeschriebener Weise, sobald das Regalbediengerät 8 vollständig aus dem Übergabefach 5' ausgefahren ist, von einem der unteren Querwagen 14 aufgenommen und dem nicht gezeigten Palettierer 21 zugeführt.

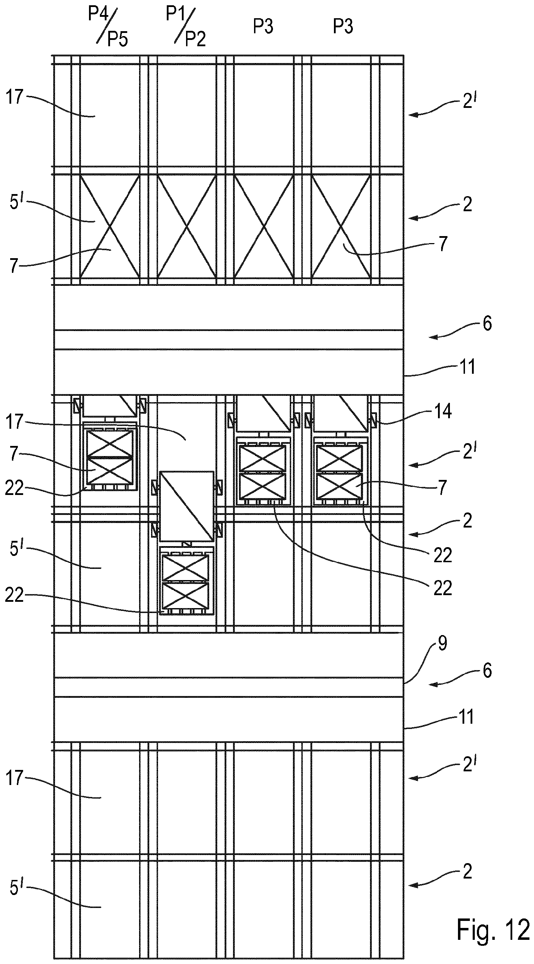

Figur 12 zeigt einen Ausschnitt der Kommissioniereinrichtung 1 gemäß Figur 11 in einem Schnitt oberhalb der Auslagerebene und oberhalb der Übergabefächer 5'. Die Regaldoppelreihen, bestehend aus jeweils zwei Regalen 2, 2', sind unterbrochen von den Fahrräumen 6. Innerhalb der Fahrräume 6 ist die Führung 11 gezeigt, die den Mast 9 aufnimmt, an dem die Regalbediengeräte 8 geführt sind. Die unteren Querwagen 14 verfahren quer zur Ausrichtung der Regale 2, 2' und übernehmen Gebinde 7 aus den Übergabefächern 5'. Der zweite Querwagen 14 von links befindet sich in einer der ersten beiden Phasen der Auslagerung. Seine Lastaufnahmemittel 22 haben ein Gebinde 7 geladen, befinden sich aber noch in dem Regal 2 mit den Übergabefächern 5'. Die beiden rechten Querwagen 14 befinden sich in der dritten Phase der Auslagerung. Die Lastaufnahmemittel 22 haben Gebinde 7 geladen und befinden sich im unbelegten Bereich 17 des anderen Regals 2' der Regaldoppelreihe. Der links dargestellte Querwagen 14 befindet sich in der vierten oder fünften Phase der Auslagerung. Die Lastaufnahmemittel 22 haben ein Gebinde 7 geladen, der Querwagen 14 befindet sich in einer Verfahrposition.

Im oberen Bereich der Figur 12 sind Gebinde 7 gezeigt, die in unteren Übergabefächern 5' in dem Regal 2 angeordnet sind. Diese Gebinde 7 weisen eine andere Größe auf, als die Gebinde 7, die auf den Lastaufnahmemitteln 22 der Querwagen 14 geladen sind. In dieser Darstellung oberhalb des Regals 2 und der Übergabefächer 5' befindet sich im Regal 2' der unbelegte Bereich 17 einer weiteren Regaldoppelreihe. Im unteren Bereich der Figur 12 sind unbelegte Übergabefächer 5' des Regals 2 gezeigt. Im Regal 2', das direkt an das Regal 2 angrenzt, befindet sich ebenfalls der unbelegte Bereich 17, über den die Lastaufnahmemittel 22 der Querwagen 14 die Gebinde 7 auf die Höhe der Übergabefächer 5' anheben können, ohne in den Fahrraum 6 der Regalbediengeräte 8 verfahren zu müssen.

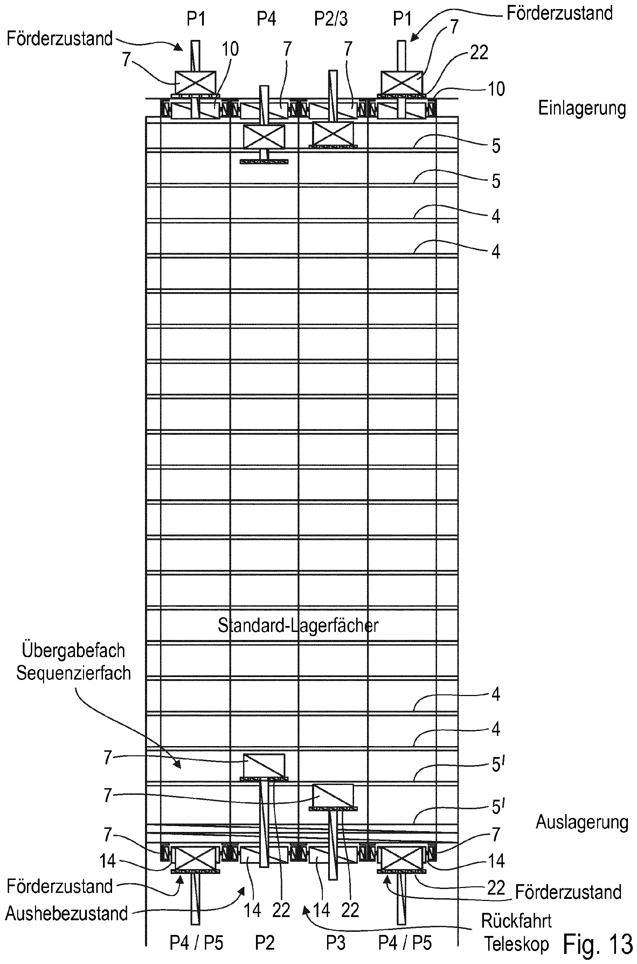

In einer Frontalansicht gemäß Figur 13 ist in einem Schnitt längs durch die Regalreihen eine vereinfachte Darstellung der Phasen der Ein- und Auslagerung gezeigt. Die einzelnen Phasen der Einlagerung im oberen Bereich der Figur 13 sind mit P1 bis P4 den Phasen eins bis vier entsprechend gekennzeichnet. Die Phasen der Auslagerung sind im unteren Bereich der Figur 13 mit P2 bis P5 den Phasen zwei bis fünf entsprechend gekennzeichnet. Das Ein- und Auslagern, sowie das damit verbundene Ein- und Ausfahren der Lastaufnahmemittel 22 der Querwagen 10, 14 durch die unbelegten Bereiche 17 zum Erreichen der Übergabefächer 5, 5', ergänzt abschließend die Figuren 9 bis 12.

Im Bereich der Einlagerung oben in Figur 13 befindet sich in der ersten Phase P1, jeweils außen dargestellt, der Querwagen 10 mit den Lastaufnahmemitteln 22, die ein Gebinde 7 geladen haben, in der Verfahrposition. In der zweiten oder dritten Phase P2/3 befinden sich die Lastaufnahmemittel 22 mit dem Gebinde 7 entweder im unbelegten Bereich 17 des Regals 2' oder bereits in einem Übergabefach 5 des Regals 2. Das Gebinde 7 ist also noch nicht an das Übergabefach 5 übergeben. Dies ist in der vierten Phase P4 der Fall. Das Gebinde 7 ist in das Übergabefach 5 übergeben, die Lastaufnahmemittel 22 sind abgesenkt und befinden sich entweder direkt unterhalb des Gebindes 7 in dem Regal 2 oder bereits im unbelegten Bereich 17 des Regals 2'. Zur Übergabe des Gebindes 7 müssen sich die Lastaufnahmemittel 22 mit einem oberen Bereich nur minimal unter einen unteren Bereich des Übergabefachs 5 bewegen um ein Ausfahren zu ermöglichen. Aus Gründen der besseren Erkennbarkeit wurden in Figur 13 die Lastaufnahmemittel 22 in der vierten Phase P4 weit in das untere Übergabefach 5 reichend dargestellt. Eine Kollision der Lastaufnahmemittel 22 mit einem Gebinde 7 im unteren der beiden oberen Übergabefächer 5 ist ausgeschlossen.

Im Bereich der Auslagerung unten in Figur 13 befindet sich der Querwagen 14 in der vierten und fünften Phase P4/P5, jeweils außen dargestellt, mit einem Gebinde 7 auf den Lastaufnahmemitteln 22 in der Verfahrposition. In der zweiten Phase P2 liegt das Gebinde 7 bereits auf den Lastaufnahmemitteln 22 der Querwagens 14 auf. Zuvor lag das Gebinde 7 in einem der unteren Übergabefächer 5'. In der vorliegenden Darstellung könnte auch der Übergang von der zweiten in die dritte Phase gezeigt sein, so dass sich das Gebinde 7 auf den Lastaufnahmemitteln 22 bereits im unbelegten Bereich 17 des Regals 2' befindet. Die dritte Phase P3 zeigt das Gebinde 7 auf den Lastaufnahmemitteln 22 im unbelegten Bereich 17 im Regal 2'. In dem unbelegten Bereich 17 wird das Gebinde 7 mit den Lastaufnahmemitteln 22 des Querwagens 14 abgesenkt. Mit Abschluss der dritten Phase P3 befindet sich der Querwagen 14 mit dem Gebinde 7 in seiner Verfahrposition der vierten oder fünften Phase um das Gebinde 7 zu dem nicht gezeigten Palettierer 21 zu verfahren.

Unterhalb der Auslagerebene, welche sich wie bereits erwähnt z.B. auf etwa 2200 mm Höhe befindet, befindet sich die Palettentransportebene auf einer Höhe von z.B. etwa 500 mm über dem Hallenboden. Der Palettentransport findet dabei außerhalb der Regale 2 und damit außerhalb dem Verfahrbereich sowohl der Querwagen 10, 14, als auch der Regalbediengeräte 8 statt. Der Palettentransport kann auch mit automatisierten Flurförderfahrzeugen erfolgen.

Offenbart ist eine Kommissioniereinrichtung mit Regalen, die eine Vielzahl von Regalfächern haben. Zur Übergabe oder Entnahme von Waren sind diese Regalfächer über ein Regalbediengerät anfahrbar. Das Regalbediengerät ist entlang der Längsachse der Regale sowohl horizontal, als auch vertikal verfahrbar und übernimmt die Waren aus Übergabefächern, in die die Waren von Querwagen, die quer zur Längsachse der Regale verfahrbar sind, abgelegt werden. In der Beladeebene sind diese Querwagen zur Übergabe der Ware an die Regalbediengeräte eingesetzt, wobei sie in der Auslagerebene zur Entnahme der Ware verfahrbar sind.

### Bezugszeichenliste:

- 1: Kommissioniereinrichtung
- 2, 2': Regal
- 4: Regalfach
- 5, 5': Übergabefach
- 6: Fahrraum
- 7: Gebinde
- 8: Regalbediengerät
- 9: Mast
- 10: Querwagen
- 11: Führung
- 12: Schiene
- 13: Querwagengruppe
- 14: Querwagen
- 15: Querwagengruppe
- 16: Schiene
- 17: unbelegter Bereich
- 18: Regalabstützung
- 20: Depalettierer
- 21: Palettierer
- 22: Lastaufnahmemittel
- 24: Teleskopsystem
- 26: Zahnstangensystem
- 28: Belader
- 30: Antrieb
- 32: Riemen
- 34: Führung
- 36: Rahmen
- 38: Holm
- 40: Gehäuse
- 42: Umlenkrolle
- 44: Laufrad
- 46: Gehäuse
- 48: Zahnstange
- 50: Antrieb
- 52: Ritzel
- 54: Laufrad
- 56: Welle
- 58: Zahnrad

## Patentansprüche

1. Kommissioniereinrichtung mit Regalen (2, 2'), die eine Vielzahl von Regalfächern (4) haben, wobei zwischen den etwa parallelen Regalen (2, 2') Fahrräume (6) vorgesehen sind, in denen Regalbediengeräte (8) verfahrbar sind, über die Regalfächer (4) und Übergabefächer (5, 5') zur Entnahme oder Übernahme von Waren anfahbar sind, und mit Querwagen (10, 14), die quer zu den Regalen (2, 2') und Fahrräumen (6) verfahrbar sind, um Waren in ein Übergabefach zu übergeben oder aus diesem zu übernehmen, wobei die Waren über eine Beschickungsstation eingelagert und über eine Auslagerstation ausgelagert werden, wobei eine Vielzahl von oberen Querwagen (10) in einer der Beschickungsstation zugeordneten Beladeebene und eine Vielzahl von unteren Querwagen (14) in einer der Auslagerstation zugeordneten Auslagerebene, die zur Beladeebene beabstandet angeordnet ist, geführt sind, **dadurch gekennzeichnet, dass** die Beladeebene im Bereich oberhalb der obersten Regalfächer (4) und Übergabefächer (6) und die Auslagerebene im Bereich unterhalb der untersten Regalfächer (4) und Übergabefächer (5') angeordnet sind..

2. Kommissioniereinrichtung nach Patentanspruch 1, wobei die Auslagerebene unterhalb einer von den untersten Übergabefächern (5') aufgespannten Regalebene angeordnet ist.

3. Kommissioniereinrichtung nach Patentanspruch 1 oder 2, wobei die unteren Querwagen (14) Übergabefächer (5') oberhalb ihrer Verfahrebene und die oberen Querwagen (10) Übergabefächer (5) unterhalb ihrer Verfahrebene anfahren.

4. Kommissioniereinrichtung nach einem der vorhergegangenen Patentansprüche, wobei die Querwagen (10, 14) Gabelwagen sind, die in der Höhe verstellbare Lastaufnahmemittel (22) aufweisen.

5. Kommissioniereinrichtung nach Patentanspruch 4, wobei die Gabelwagen (10, 14) ein Teleskopsystem (24) oder ein Zahnstangensystem (26) aufweisen.

6. Kommissioniereinrichtung nach einem der Patentansprüche 4 oder 5, wobei die Lastaufnahmemittel (22) der Regalbediengeräte (8) und/oder der Querwagen (10, 14) in der Breite verstellbar ausgeführt sind.

7. Kommissioniereinrichtung nach einem der vorhergegangenen Patentansprüche, wobei eine Palettentransportebene unterhalb der Auslagerebene angeordnet ist.

8. Kommissioniereinrichtung nach einem der vorhergegangenen Patentansprüche, wobei die Anzahl der oberen Querwagen (10) der der unteren Querwagen (14) entspricht.

9. Kommissioniereinrichtung nach einem der vorhergegangenen Patentansprüche, wobei die Querwagen (10, 14) an Schienen (12, 16) geführt sind.

10. Kommissioniereinrichtung nach einem der vorhergegangenen Patentansprüche, wobei die Übergabefächer (5, 5') in einer Regaldoppelreihe nur in einem Regal (2) angeordnet sind.

## Claims

1. Order-picking apparatus having racks (2, 2') which have a plurality of shelves (4), wherein between the approximately parallel racks (2, 2'), travel spaces (6) are provided in which rack operating devices (8) can be moved, by means of which shelves (4) and transfer compartments (5, 5') can be accessed in order to pick up or accept goods, and having transverse carriages (10, 14) which can be moved transversely to the shelves (2, 2') and travel spaces (6) in order to transfer goods to or from a transfer compartment, wherein the goods are placed in storage via a loading station and removed from storage via a removal station, wherein a plurality of upper transverse carriages (10) are guided in a loading plane associated with the loading station and a plurality of lower transverse carriages (14) are guided in a removal plane associated with the removal station, which plane is arranged at a distance from the loading plane, **characterised in that** the loading plane is arranged in the region above the uppermost shelves (4) and transfer compartments (5) and the removal plane is arranged in the region below the lowermost shelves (4) and transfer compartments (5').

2. Order-picking apparatus according to claim 1,
wherein the removal plane is arranged below a rack plane spanned by the lowermost transfer compartments (5').

3. Order-picking apparatus according to claim 1 or 2,
wherein the lower transverse carriages (14) access transfer compartments (5') above their movement plane and the upper transverse carriages (10) access transfer compartments (5) below their movement plane.

4. Order-picking apparatus according to any one of the preceding claims,
wherein the transverse carriages (10, 14) are fork carriages which have height-adjustable load handling means (22).

5. Order-picking apparatus according to claim 4,
wherein the fork carriages (10, 14) have a telescopic system (24) or a rack and pinion system (26).

6. Order-picking apparatus according to any one of claims 4 or 5,
wherein the load handling means (22) of the rack operating devices (8) and/or of the transverse carriages (10, 14) are designed to be adjustable in width.

7. Order-picking apparatus according to any one of the preceding claims, wherein a pallet transport plane is arranged below the removal plane.

8. Order-picking apparatus according to any one of the preceding claims, wherein the number of upper transverse carriages (10) corresponds to the number of lower transverse carriages (14).

9. Order-picking apparatus according to any one of the preceding claims, wherein the transverse carriages (10, 14) are guided on rails (12, 16).

10. Order-picking apparatus according to any one of the preceding claims, wherein the transfer compartments (5, 5') are arranged in a double row of racks in only one rack (2).

## Revendications

1. Appareil de préparation de commandes avec des rayonnages (2, 2') qui présentent une pluralité de compartiments de rayonnage (4), dans lequel entre les rayonnages (2, 2') à peu près parallèles sont prévus des espaces de conduite (6), dans lesquels des transtockeurs (8) peuvent être déplacés, par le biais desquels des compartiments de rayonnage (4) et des compartiments de transfert (5, 5') peuvent être atteints pour le retrait ou la remise de marchandises, et avec des chariots transversaux (10, 14) qui sont déplaçables transversalement aux rayonnages (2, 2') et aux espaces de conduite (6), afin de transférer des marchandises dans un compartiment de transfert ou de les réceptionner de celui-ci, dans lequel les marchandises sont entrées par le biais d'une station de chargement et sont sorties par le biais d'une station de sortie, dans lequel une pluralité de chariots transversaux (10) supérieurs est guidée dans un plan de chargement associé à la station de chargement et une pluralité de chariots transversaux (14) inférieurs est guidée dans un plan de sortie associé à la station de sortie qui est agencé à distance du plan de chargement, **caractérisé en ce que** le plan de chargement est agencé dans la zone au-dessus des compartiments de rayonnage (4) et des compartiments de transfert (5) les plus hauts et le plan de sortie est agencé dans la zone en dessous des compartiments de rayonnage (4) et compartiments de transfert (5') les plus bas.

2. Appareil de préparation de commandes selon la revendication 1,
dans lequel le plan de sortie est agencé en dessous d'un plan de rayonnage serré par les compartiments de transfert (5') les plus bas.

3. Appareil de préparation de commandes selon la revendication 1 ou 2,
dans lequel les chariots transversaux (14) inférieurs atteignent des compartiments de transfert (5') au-dessus de leur plan de déplacement et les chariots transversaux (10) supérieurs atteignent des compartiments de transfert (5) en dessous de leur plan de déplacement.

4. Appareil de préparation de commandes selon l'une quelconque des revendications précédentes,
dans lequel les chariots transversaux (10, 14) sont des chariots à fourche qui présentent des moyens de réception de charge (22) réglables en hauteur.

5. Appareil de préparation de commandes selon la revendication 4,
dans lequel les chariots à fourche (10, 14) présentent un système télescopique (24) ou un système à crémaillère (26).

6. Appareil de préparation de commandes selon l'une quelconque des revendications 4 ou 5,
dans lequel les moyens de réception de charge (22) des transtockeurs (8) et/ou des chariots transversaux (10, 14) sont réalisés de manière réglable en largeur.

7. Appareil de préparation de commandes selon l'une quelconque des revendications précédentes, dans lequel un plan de transport de palette est agencé en dessous du plan de sortie.

8. Appareil de préparation de commandes selon l'une quelconque des revendications précédentes, dans lequel le nombre de chariots transversaux (10) supérieurs correspond à celui des chariots transversaux (14) inférieurs.

9. Appareil de préparation de commandes selon l'une quelconque des revendications précédentes, dans lequel les chariots transversaux (10, 14) sont guidés au niveau de rails (12, 16).

10. Appareil de préparation de commandes selon l'une quelconque des revendications précédentes, dans lequel les compartiments de transfert (5, 5') sont agencés dans une double rangée à rayonnage seulement dans un rayonnage (2).
